# DEMANDE DE BREVET EUROPEEN

(11) **EP 0 896 935 A1**
(43) Date de publication de la demande: **17.02.1999**
(21) Numéro de dépôt: 98410092.5
(22) Date de dépôt: 10.08.1998
(51) Int. Cl.: B65G 1/02, B67D 5/60

(54) **Dispositif de stockage de futs**

(30) Priorité: 11.08.1997 FR 9710360
(71) Demandeur: Brenon, Yves, 74420 Boege (FR)
(72) Inventeur: Brenon, Yves, 74420 Boege (FR)
(74) Mandataire: Gasquet, Denis

(57) **Abrégé**

Dispositif de stockage (1) de fûts (2) contenant un produit susceptible d'être versé par écoulement, du type constitué par une structure de stockage (4) dans laquelle est (sont) disposé(s) le(s) fût(s), caractérisé en ce qu'il comporte au moins un module élémentaire de stockage (4a) muni de moyens de positionnement et de stockage (MPS) d'un fût, lesdits moyens de positionnement et de stockage étant destinés à permettre au fût de passer d'une position passive, dite de stockage, à au moins une position active, dite de versement, où le produit (3) peut s'écouler par un orifice d'écoulement (7) du fût.

## Description

La présente invention concerne un dispositif de stockage de fûts du type contenant un produit susceptible d'être versé par écoulement et notamment un dispositif de positionnement du fût permettant de faciliter sa mise en position de versement.

L'utilisation de produits chimiques solides ou liquides contenus dans des fûts et destinés à être versés par écoulement dans d'autres contenants de faible taille est présente dans la plupart des industries ou artisanats de transformation ou de production. L'utilisation de ces fûts et leur stockage pose de nombreux problèmes, notamment, selon la fréquence de leur usage et le nombre des produits utilisés.

Dans la pratique, ces fûts sont généralement stockés le long d'un mur ou dans le coin d'une pièce et sont, le plus souvent, empilés afin de limiter au minimum l'encombrement d'un tel stockage. Cependant, l'utilisateur n'a généralement besoin que d'une petite quantité de chacun des produits et la méthode de stockage présente, de ce fait, de nombreux inconvénients liés à la manipulation des différents fûts. En effet, lors du versement du produit, l'utilisateur est obligé d'effectuer un grand nombre d'opérations de manutention différentes pour déplacer les fûts et pour les maintenir penchés, en position de versement, pendant que le produit s'écoule dans le récipient qu'il veut remplir. L'ensemble de ces opérations est mal aisé et peut se révéler dangereux selon les produits contenus dans les fûts.

On connaît par ailleurs des dispositifs de stockage constitués par une étagère destinée à recevoir les fûts en position couché, cependant un tel dispositif présente des risques de fuite accidentelle et un certain encombrement par rapport au nombre de fûts stockés.

La présente invention a pour objectif de résoudre les inconvénients précités grâce à des moyens simples, sûrs, fiables et dont la mise en oeuvre s'effectue aisément.

Selon sa caractéristique principale, le dispositif de stockage de fûts contenant un produit susceptible d'être versé par écoulement est du type constitué par une structure de stockage dans laquelle est (sont) disposé(s) le(s) fût(s) et est caractérisé en ce qu'il comporte au moins un module élémentaire de stockage muni de moyens de positionnement et de stockage d'un fût, lesdits moyens de positionnement et de stockage étant destinés à permettre au fût de passer d'une position passive, dite de stockage, à au moins une position active, dite de versement, où le produit peut s'écouler par un orifice d'écoulement du fût.

Selon une autre caractéristique, la structure de stockage comporte une armature rigide et les moyens de positionnement et de stockage sont constitués par au moins un organe support de fût sur lequel est (sont) disposé(s) le(s) fût(s), ledit organe support étant mobile par rapport à l'armature rigide.

Selon un mode de réalisation du dispositif de stockage selon l'invention, l'organe support de fût est constitué par un berceau articulé en pivotement selon un axe transversal par rapport au fût, ledit axe étant contenu dans un plan sensiblement horizontal.

Selon sa caractéristique complémentaire, l'organe support de fût comporte des moyens de verrouillage destinés à solidariser le fût à l'organe support de fût.

Selon une autre caractéristique, l'armature rigide est constituée par un ensemble d'éléments de structure pouvant être assemblés de manière amovible les uns aux autres, de manière à pouvoir constituer une structure de stockage pouvant comporter plusieurs modules élémentaires de stockage.

Selon une autre variante d'exécution, les éléments de structure comportent trois types d'éléments différents, des embases, des montants d'armature latéraux et un socle ou pied.

Selon le mode de réalisation préféré du dispositif de stockage selon l'invention, chaque module élémentaire comporte une embase inférieure, deux montants d'armature latéraux et une embase supérieure, la structure de stockage étant constituée par une superposition de modules élémentaires dont l'embase supérieure d'un module constitue l'embase inférieure du module suivant.

Par ailleurs, le dispositif de stockage comporte des moyens de blocage destinés à permettre le blocage du fût et/ou de son organe support de fût dans la position passive de stockage.

Selon une caractéristique complémentaire, le dispositif de stockage comporte au moins un organe de récupération et de protection destiné à récupérer toute perte de produits, occasionnée lors du versement ou à protéger le local de stockage de toute projection intempestive du produit.

D'autres caractéristiques et avantages de l'invention se dégageront de la description qui va suivre en regard des dessins annexés qui ne sont donnés qu'à titre d'exemples non limitatifs.

Les figures 1 à 7 illustrent le mode de réalisation préféré du dispositif de stockage selon l'invention et des variantes d'exécution de celui-ci.

La figure 1 illustre en perspective l'ensemble du dispositif de stockage, les fûts étant en position passive de stockage.

La figure 2 illustre en perspective le dispositif de stockage lorsque l'un des fûts se trouve en position active de versement.

La figure 3 représente en vue éclatée les éléments de structure destinés à être assemblés pour former l'armature rigide du dispositif.

Les figures 4a et 4b représentent en vue latérale un module de stockage élémentaire et son fût, respectivement en position passive de stockage et en position active de versement.

Les figure 5a et 5b illustrent en perspective un mode de réalisation et une variante d'exécution de l'organe support de fût.

La figure 6 illustre en perspective une variante d'exécution du dispositif dans lequel celui-ci comporte des moyens de protection et de récupération.

La figure 7 illustre en vue latérale une variante d'exécution d'un dispositif de stockage dans lequel il comporte des moyens de fixation.

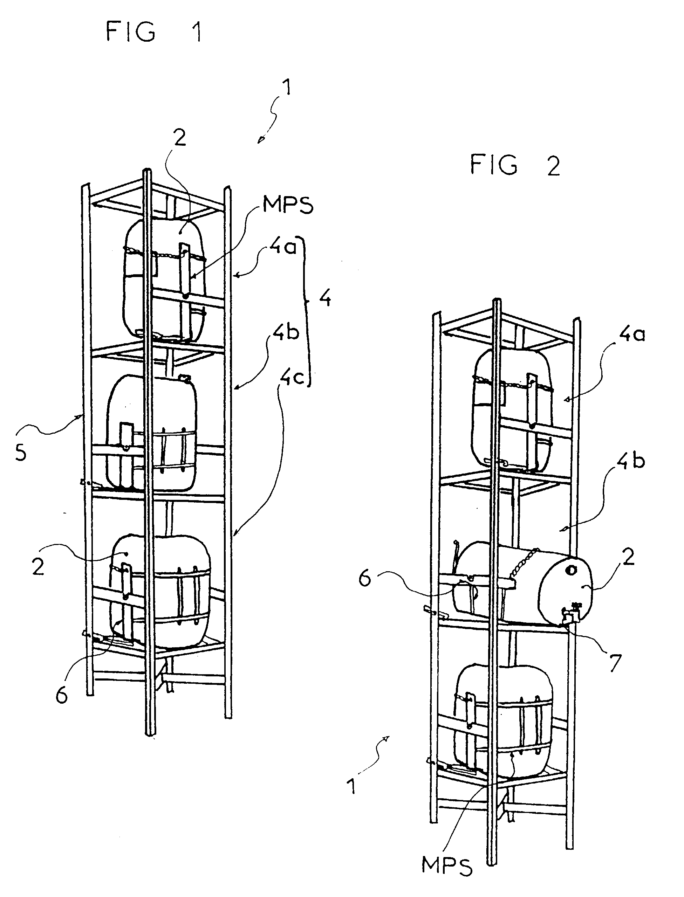

Selon l'invention, le dispositif de stockage de fût portant la référence générale (1) est constitué par une structure de stockage (4) comportant un ensemble de modules de stockage élémentaire (4a, 4b, 4c) destinés à stocker chacun un fût (2) ou bidon. Ces modules peuvent être assemblés ensemble afin d'obtenir un dispositif de stockage apte à contenir plusieurs fûts, tel qu'illustré figures 1 et 2. Les fûts (2) destinés à être stockés sont de manière connue en soi du type contenant un produit susceptible de s'écouler au travers d'un orifice d'écoulement (7) du fût (2), ledit orifice pouvant être muni d'un robinet ou d'un bec verseur, par exemple, afin de faciliter le versement.

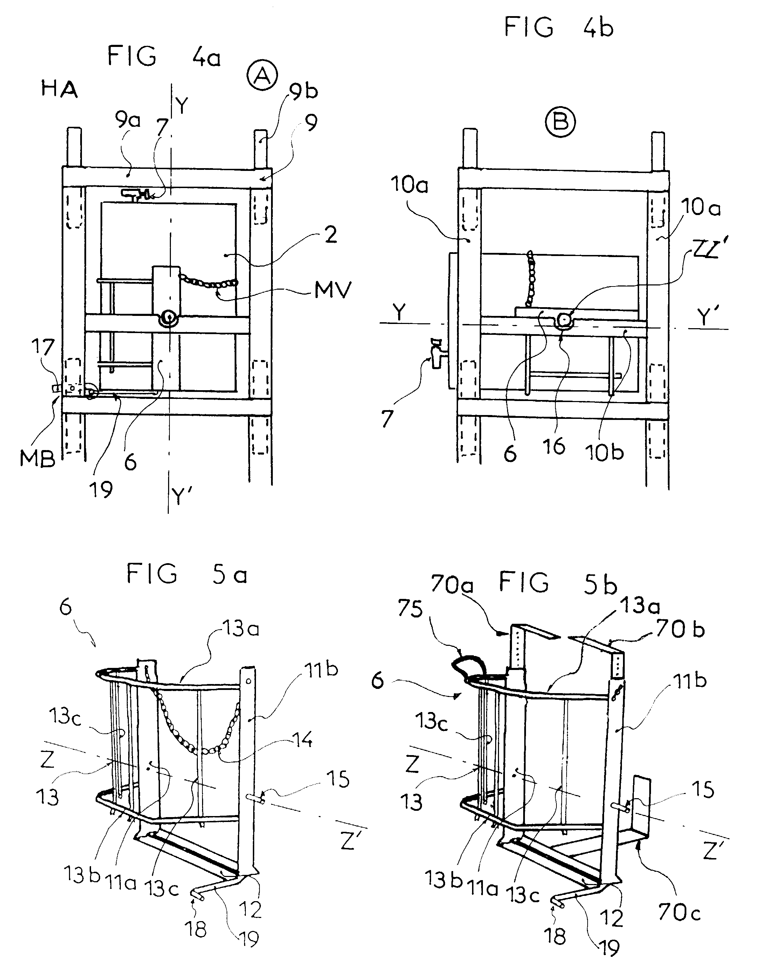

Selon l'invention, le dispositif de stockage (1), et plus particulièrement les modules élémentaires de stockage (4a, 4b, 4c), comporte des moyens de positionnement et de stockage (MPS) du fût (2) de manière à permettre, d'une part, son stockage dans une position passive de stockage (A) où son orifice d'écoulement (7) est disposé vers le haut (HA) tel qu'illustré figure 4a, et d'autre part, son positionnement dans une position active de versement (B) où son orifice est positionné dans une position permettant et favorisant l'écoulement du produit, comme le montre la figure 4b.

Selon le mode de réalisation préféré de l'invention, la structure de stockage (4) est constituée par une armature rigide (5) qui forme le châssis ou cadre du dispositif. Les moyens de positionnement et de stockage (MPS) sont constitués par au moins un organe support de fût (6) disposé de manière mobile sur l'armature rigide (5), permettant ainsi le stockage du fût dans sa position passive (A) et son positionnement en position active de versement (B). Il va de soi que, selon le mode de réalisation préféré, chaque module de stockage élémentaire (4a, 4b, 4c) comporte un organe support de fût (6). De ce fait, lors du versement du produit dans un récipient, l'utilisateur possède ses deux mains libres pour effectuer l'opération.

L'armature rigide (5) est avantageusement constituée par un assemblage d'éléments de structure (ES) de plusieurs types différents susceptibles d'être assemblés de manière amovible selon plusieurs configurations possibles en fonction des besoins de l'utilisateur. L'organe support de fût est avantageusement constitué par un berceau (6) articulé en pivotement selon un axe transversal (ZZ') par rapport à l'armature rigide (5).

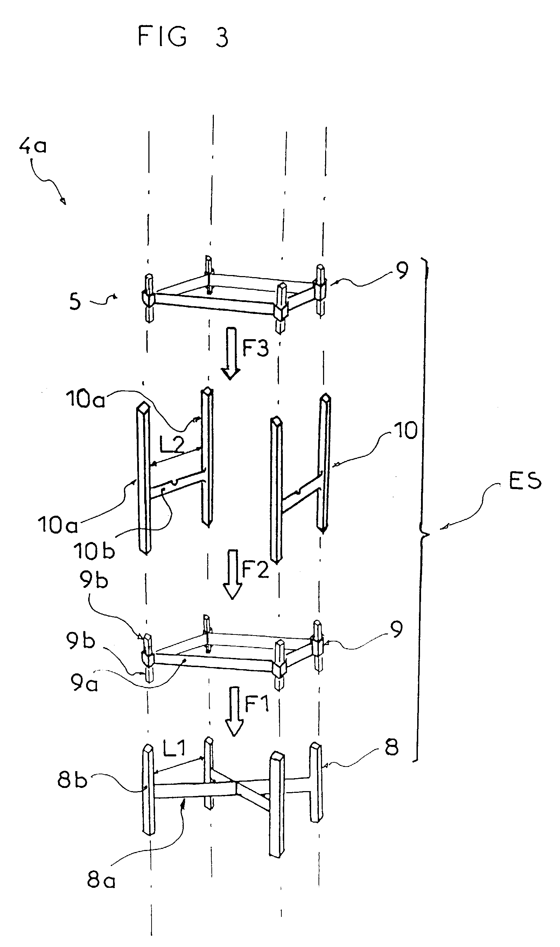

Selon le mode de réalisation préféré de l'invention, les éléments de structure (ES) susceptibles de s'assembler pour former l'armature rigide (5) sont avantageusement de trois types et sont constitués par des pieds (8), des embases de modules (9) et des montants d'armature latéraux (10) comme le montre la figure 3. Leur assemblage permet de constituer la structure de stockage (4) qui est formée de modules de stockage élémentaires (4a, 4b, 4c). L'assemblage des modules élémentaires (4a, 4b, 4c) s'effectue en superposant successivement ces modules l'un au dessus de l'autre selon une direction verticale pour constituer une structure de stockage à l'intérieure de laquelle plusieurs fûts peuvent être stockés en position passive. Notons que les fûts sont stockés en position passive, c'est à dire que les fûts présentent leur axe de révolution selon une direction verticale, leur orifice d'écoulement positionné vers le haut.

Les pieds (8) sont destinés à servir de socle et peuvent ainsi supporter une superposition de modules de stockage élémentaires (4a, 4b, 4c). Ils sont avantageusement constitués par un croisillon central (8a) reliant quatre pieds (8b) proprement dits constitués avantageusement par des tubes carrés disposés verticalement, le croisillon central (8a) étant, par exemple, réalisé en fer plat. Lesdits pieds (8b) sont disposés aux quatre coins d'un quadrilatère comme, par exemple, un rectangle ou avantageusement un carré de côté L1.

Les embases de module (9) sont constituées par un cadre (9a) ayant la forme du quadrilatère précédemment décrit et portant à chacun de ses coins des portions de tubes carrés (9b) s'étendant de part et d'autre au-dessus et en dessous du cadre (9a), lesdites portions de tube (9b) étant de dimensions ajustées aux dimensions internes des tubes carrés des pieds (8b) de manière à pouvoir s'enfiler dans ceux-ci lors de l'assemblage de l'armature rigide (5) qui s'effectue selon F1, F2, F3 tel qu'illustré figure 3.

Selon le mode de réalisation préféré de l'invention, les montants d'armature latéraux (10) sont constitués par deux tubes carrés (10a) parallèles, reliés entre eux par une barre transversale (10b) avantageusement réalisée en fer plat. Les tubes (10a) sont séparés d'une distance (L2) équivalente à la distance (L1) séparant les portions de tube (9b) de l'embase et des pieds (8b).

Les dimensions des tubes (10a) utilisés pour réaliser les montants (10) sont les mêmes que celles des tubes (8b) constituant les pieds, de façon à pouvoir s'assembler à l'embase (9) de manière ajustée, comme le pied (8).

Selon le mode de réalisation préféré de l'invention, les modules élémentaires de stockage (4a, 4b, 4c) sont constitués par deux embases (9) assemblées aux extrémités supérieures et inférieures de deux montants d'armature latéraux (10), disposés en vis-à-vis. Notons que l'embase supérieure d'un module de stockage élémentaire (4a) peut constituer avantageusement l'embase inférieure d'un deuxième module élémentaire (4b) qui vient ainsi se superposer au premier module, comme le montrent les figures 1, 2 et 3. Ainsi, l'armature rigide (5) du dispositif de stockage (1) est formée par un pied ou socle (8) sur lequel viennent se superposer un ou plusieurs modules de stockage élémentaires.

Notons que la distance (L1) représentant la largeur du carré formé par l'armature dans un plan transversal peut être avantageusement comprise entre 30 et 60 cm en fonction de la taille des fûts (2) destinés à être stockés et peut avantageusement être choisie égale à 43 cm pour des fûts de 20 à 35 l, et égale à 50 cm pour des fûts de 35 à 60 l. Il va de soi que ces dimensions ne sont donnés qu'à titre purement indicatif et ne restreignent aucunement le champs de protection de l'invention.

Selon le mode de réalisation préféré, les moyens de positionnement et de stockage (MPS) du dispositif, constitués par l'organe support de fût (6), sont articulés en pivotement par rapport à l'armature rigide (5) autour d'un axe (ZZ') transversal disposé dans un plan horizontal. L'organe support de fût (6) a la forme d'un berceau ou d'un panier constitué par un ensemble de parois et de tiges les reliant entre elles, comme le montre la figure 5. Ainsi, il comporte deux parois latérales (11a, 11b), une paroi d'appui inférieure (12) et un berceau (13) formé par des tiges rigides (13a, 13b, 13c). L'organe support de fût (6) possède avantageusement des moyens de verrouillage (MV) destinés à permettre le verrouillage du fût (2) dans l'organe support (6) et à permettre ainsi son pivotement d'une position de stockage (A), où l'axe de révolution (YY') du fût (2) est disposé verticalement, son orifice d'écoulement (7) dirigé vers le haut (HA), vers au moins une position active (B), où ledit axe (YY') est disposé dans un plan horizontal de manière à ce que l'orifice (7) se présente latéralement tel qu'illustré figure 4a et 4b.

Les moyens de verrouillage (MV) sont avantageusement constitués par une chaîne (14) destinée à relier de manière connue en soi les parois latérales (11a, 11b) de l'organe support de fût (6) pour emprisonner le fût (2) dans son berceau (13). Il va de soi que lesdits moyens de verrouillage pourraient être constitués par tous autres moyens équivalents tels qu'un dispositif de serrage du type à courroie, par exemple, sans pour autant sortir du champ de protection de l'invention. Notons que ces moyens de verrouillage permettent notamment de retenir le fût dans l'organe support de fût lors du passage de celui ci de sa position active de versement vers sa position passive de stockage.

Selon le mode de réalisation préféré du dispositif, l'articulation entre l'organe support de fût (6) et l'armature rigide (5) autour de l'axe (ZZ') est obtenue grâce à deux portions d'axes de pivotement (15) coaxiaux disposés respectivement sur les parois latérales (11a, 11b) de l'organe support de fût (6). Lesdits axes (15) sont destinés à venir se positionner dans deux logements (16) disposés respectivement sur les barres transversales (10b) des deux montants d'armature latéraux (10) qui sont disposés face à face. Lesdits logements sont avantageusement constitués par des encoches (16) disposées dans la partie supérieure du fer plat formant les barres transversales. Il va de soi qu'il peut être prévu des moyens de verrouillage des axes tels que des goupilles ou des têtes de blocage disposés à l'extrémité des axes (15) de manière à empêcher leurs sorties intempestive des logements (16).

Selon ce mode de réalisation préféré, l'organe support de fût (6) peut ainsi pivoter vers l'avant de 90° ou plus afin de positionner le fût (2) en position active ; des moyens d'arrêt permettant avantageusement de limiter l'amplitude du pivotement. Notons que les moyens d'arrêt peuvent être constitués par le tube avant du cadre (9a) de l'embase (9), ledit tube constituant une surface de butée pour le berceau (13) de l'organe support de fût (6), limitant ainsi le pivotement du fût (2) à un angle légèrement supérieur à 90° afin qu'en position active le produit contenu dans le fût puisse être intégralement récupéré par versement. Il va de soi que les moyens d'arrêt pourraient autoriser un débattement plus important ou être constitués par tout autre système équivalent, sans pour autant sortir du champ de protection revendiqué de l'invention.

Par ailleurs, le dispositif de stockage (1) comporte également des moyens de blocage (MB) destinés à bloquer le fût (2) et son support (6) dans leur position passive de stockage (A) illustrée figure 4a. Ces moyens de blocage (MB) sont avantageusement constitués par un crochet pivotant (17) solidaire d'un des montants d'armature latéraux et destinés à coopérer avec l'extrémité recourbée (18) d'une tige de blocage (19) solidaire de l'organe support de fût (6).

Il va de soi que des systèmes de blocage équivalents pourraient être disposés sur un tel dispositif de stockage. De plus, ces moyens de blocage pourraient également permettre le blocage de l'organe support de fût dans une position active ou dans une position intermédiaire, et ce notamment lors de la mise en place du fût dans son organe support. Par ailleurs, les moyens de blocage pourraient également bloquer, non plus l'organe support de fût, mais coopérer avec le fût lui-même pour obtenir le blocage, sans pour autant sortir du champ de protection revendiqué de l'invention.

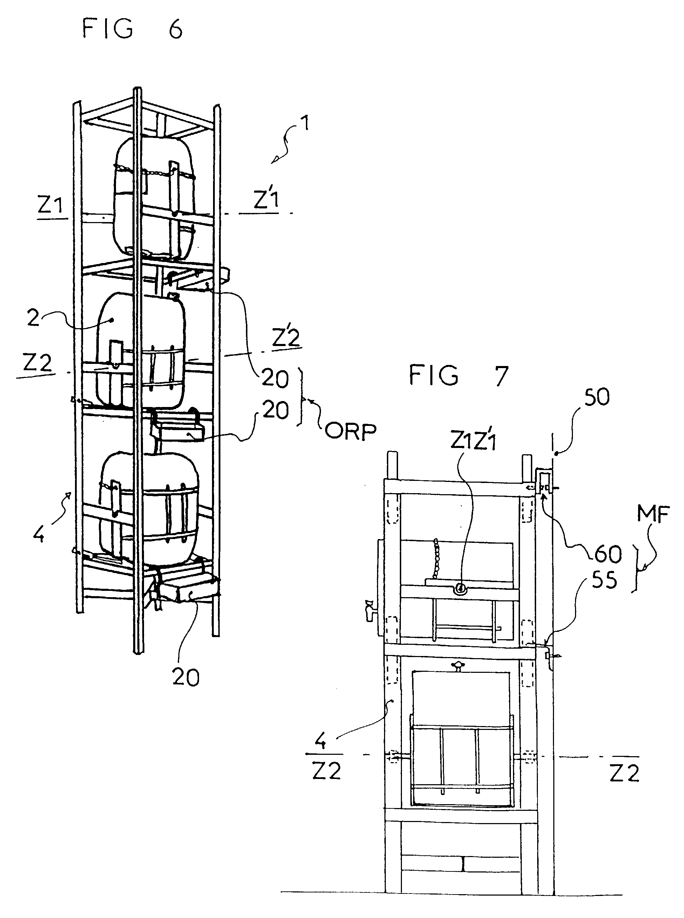

Il est important de noter que les éléments de structure (ES), tels que les pieds, les montants latéraux et les embases, sont assemblés de manière amovible grâce à la coopération entre les portions de tubes d'assemblage (9b) des embases et des tubes constituant les pieds (8b) ou ceux (10a) constituant les montants latéraux (10). De ce fait, la structure de stockage (4) peut ainsi comporter plusieurs modules élémentaires superposés. Notons que les pieds (8b) étant disposés aux coins d'un carré, les montants d'armature latéraux (10) de deux modules superposés successifs peuvent être orientés perpendiculairement d'un module à l'autre, afin que leurs axes de pivotement (Z1Z'1) et (Z2Z'2) soient situés dans deux directions orthogonales. Ainsi, la position active de versement (B) de chacun des fûts (2) permet de présenter l'orifice d'écoulement (7) du fût alternativement sur chacune des faces latérale, frontale et/ou dorsale de la structure de stockage (4) tel qu'illustré figure 6 et 7.

Il va de soi que l'armature rigide (5) et l'organe support de fût (6) peuvent être réalisés dans tous matériaux possédant des caractéristiques de rigidité et de solidité adéquates et notamment les matériaux métalliques tels que le fer, l'acier ou les alliages afin de pouvoir supporter le poids des modules élémentaires et des fûts lorsqu'ils sont remplis mais également certaines matières plastiques ou le bois par exemple.

Par ailleurs, comme le montre la figure 7, lorsqu'on empile successivement les modules élémentaires de stockage, le dispositif de stockage (1) peut comporter des moyens de fixation (MF) destinés à permettre de fixer l'ensemble de la structure (4) à un mur (50) le long duquel elle est située. Lesdits moyens de fixation (MF) peuvent être constitués, par exemple, par des équerres (55) et/ou des étriers (60) disposées sur un ou plusieurs éléments de structure (ES) d'un module élémentaire et avantageusement du module situé à l'extrémité supérieure de la structure, lesdites équerres étant destinées à coopérer avec un dispositif de vis et de chevilles, par exemple. Ceci permet de supprimer les risques de basculement de la structure, essentiellement lorsque plusieurs modules sont superposés.

Par ailleurs, selon un perfectionnement du dispositif de stockage (1) illustré figure 6, celui-ci peut comporter des organes de récupération et de protection (ORP) destinés à éviter la perte de produit lors du versement ainsi qu'à protéger le local de stockage. Lesdits organes de récupération et de protection (ORP) peuvent avantageusement être constitués par des bacs (20) disposés de manière amovible sur chaque module élémentaire sur l'embase inférieure (9), de manière à être situés à l'aplomb de l'orifice d'écoulement (7) du fût (2) lorsqu'il se trouve en position active de versement. Il va de soi que les organes de récupération et de protection (ORP) pourraient être constitués par d'autres systèmes équivalents tels que des plateaux disposés tout autour du pied, par exemple, lesdits plateaux étant séparés d'une face de la structure à l'autre afin d'éviter tout mélange de produits chimiques provenants de fûts différents. Par ailleurs le dispositif peut comporter des moyens de maintien destinés à permettre à l'utilisateur de positionner le récipient dans lequel il veut verser le produit à l'aplomb de l'orifice d'écoulement du fût lorsque celui ci est en position de versement, lesdits moyens pouvant être confondus avec les organes de récupération et de protection tels que les bacs (20) illustrés figure 6.

Notons également que la forme du berceau (13) et le positionnement des portions d'axes de pivotement (15) sont avantageusement choisis de manière à ce que le pivotement d'un fût (2) rempli du produit (13) de sa position inactive (A) vers sa position active (B) s'effectue sans nécessiter d'effort particulier de la part de l'utilisateur. Pour ce faire, le berceau (13) peut être muni d'un poignée (75) destinée à faciliter la manutention, ladite poignée étant décalée pour ne pas gêner le versement. comme le montre la variante illustrée figure 5b.

De plus, comme le montre la variante illustrée figure 5b, les moyens de verrouillage de l'organe support de fût (6) peuvent être constitués non plus par une chaîne tel que précédemment décrit mais par un ensemble d'équerres réglables qui permettent de bloquer le fût dans son organe support dans toutes les directions. Selon cette variante, deux équerres latérales (70a, 70b) réglables s'étendent depuis les parois latérales (11a, 11b) de l'organe support (6) pour venir se bloquer contre la paroi supérieure du fût et l'empêcher de glisser vers l'avant lorsque l'utilisateur positionne le fût en position active de versement (B). Une équerre inférieure (70c) également réglable s'étend de la paroi inférieure (12) de l'organe support (6) pour venir bloquer le fût le long de sa paroi cylindrique, du coté opposé au berceau (13). Selon cette variante, le fût est totalement immobilisé dans l'organe support de fût et peut ainsi être manipulé en toute sécurité par l'utilisateur.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Dispositif de stockage (1) de fûts (2) contenant un produit susceptible d'être versé par écoulement, du type constitué par une structure de stockage (4) dans laquelle est (sont) disposé(s) le(s) fût(s) (2), caractérisé en ce qu'il comporte au moins un module élémentaire de stockage (4a) muni de moyens de positionnement et de stockage (MPS) d'un fût (2), lesdits moyens de positionnement et de stockage (MPS) étant destinés à permettre au fût (2) de passer d'une position passive (A), dite de stockage, à au moins une position active (B), dite de versement, où le produit (3) peut s'écouler par un orifice d'écoulement (7) du fût (2).

2. Dispositif de stockage (1) selon la revendication 1, caractérisé en ce que la structure de stockage (4) comporte une armature rigide (5) et en ce que les moyens de positionnement et de stockage (MPS) sont constitués par au moins un organe support de fût (6) sur lequel est (sont) disposé(s) le(s) fût(s) (2), ledit organe support (6) étant mobile par rapport à l'armature rigide (5).

3. Dispositif de stockage (1) selon la revendication 2, caractérisé en ce que l'organe support de fût est constitué par un berceau (6) articulé en pivotement selon un axe (ZZ') transversal par rapport au fût, ledit axe étant contenu dans un plan sensiblement horizontal.

4. Dispositif de stockage (1) selon la revendication 2 ou 3, caractérisé en ce que l'organe support de fût (6) comporte des moyens de verrouillage (MV) destinés à solidariser le fût (2) à l'organe support de fût (6).

5. Dispositif de stockage (1) selon l'une quelconque des revendications 2 à 4, caractérisé en ce que l'armature rigide (5) est constituée par un ensemble d'éléments de structure (ES) pouvant être assemblés de manière amovible les uns aux autres, de manière à pouvoir constituer une structure de stockage (4) pouvant comporter plusieurs modules élémentaires de stockage (4a, 4b, 4c).

6. Dispositif de stockage (1) selon la revendication 5, caractérisé en ce que les éléments de structure (ES) comportent trois types d'éléments différents, des embases (9), des montants d'armature latéraux (10) et un socle ou pied (8).

7. Dispositif de stockage (1) selon la revendication 6, caractérisé en ce que chaque module élémentaire (4a, 4b, 4c) comporte une embase inférieure (9), deux montants d'armature latéraux (10) et une embase supérieure (9), la structure de stockage (4) étant constituée par une superposition de modules élémentaires (4a, 4b, 4c) dont l'embase supérieure d'un module constitue l'embase inférieure du module suivant.

8. Dispositif de stockage (1) selon l'une quelconque des revendications 2 à 7, caractérisé en ce qu'il comporte des moyens de blocage (MB) destinés à permettre le blocage du fût (2) et/ou de son organe support de fût (6) dans la position passive de stockage (A).

9. Dispositif de stockage (1) selon l'une quelconque des revendications précédentes, caractérisé en ce qu'il comporte au moins un organe de récupération et de protection (ORP) destiné à récupérer toute perte de produits, occasionnée lors du versement et/ou à protéger le local de stockage de toute projection intempestive de produit.
